# EUROPÄISCHE PATENTSCHRIFT

(11) **EP 1 588 901 B1**
(45) Veröffentlichungstag und Bekanntmachung des Hinweises auf die Patenterteilung: **24.01.2007**
(21) Anmeldenummer: 05007355.0
(22) Anmeldetag: 05.04.2005
(51) Int. Cl.: B60R 16/02

(54) **Verfahren zum Verändern wenigstens einer einstellbaren Funktion eines Kraftfahrzeugs**
Method for changing at least one adjustable function of a motor vehicle
Procédé de changement d'au moins une fonction réglable d'un véhicule automobile

(30) Priorität: 23.04.2004 DE 102004019829
(43) Veröffentlichungstag der Anmeldung: 26.10.2005
(73) Patentinhaber: AUDI AG, 85045 Ingolstadt (DE)
(72) Erfinder: Donner, Eckart, 92334 Berching (DE)
(74) Vertreter: Thielmann, Frank

(56) Entgegenhaltungen:
- EP-A- 0 838 363
- EP-A- 1 013 510
- DE-A1- 10 017 279
- DE-A1- 10 059 792
- US-A- 5 513 107
- US-A1- 2003 171 863

## Beschreibung

Die Erfindung betrifft ein Verfahren zum Verändern wenigstens einer einstellbaren Funktion eines Kraftfahrzeugs.

Moderne Kraftfahrzeuge bieten eine Vielzahl von Funktionen, die in ihrer Art unterschiedliche Auswirkungen auf das Fahrzeug bzw. dessen Betriebsweise haben. So sind Funktionen einstellbar, die auf den Fahrbetrieb überhaupt keinen Einfluss haben, wie beispielsweise Funktionen zur Einstellung des Fahrer- oder Beifahrersitzes oder beispielsweise der Klimaanlage etc. Es gibt aber auch Funktionen, die einen beachtlichen Einfluss auf den Fahrzeugbetrieb haben. Zu nennen sind hier beispielsweise Fahrerassistenzsysteme wie ein Spurwechselassistenzsystem, ein Lane-Departure-Warning-System, ein Adaptive-Cruise-Control-System und Ähnliches, also alles Systeme, die der Erfassung von Fahr- oder Betriebssituationen oder der unmittelbaren Beeinflussung des Fahrbetriebs selbst dienen.

Vom Fahrzeughersteller werden nun insbesondere solche "kritischen" weil den Fahrbetrieb oder die Fahrleistung oder die Gefahreninformation beeinflussenden Funktionen konservativ eingestellt, um ein hohes Maß an Sicherheit zu bieten, so dass der Fahrer nicht durch von Haus aus zu hoch eingestellte Systemeingriffsschwellen oder dergleichen in Situationen gerät, die im Hinblick auf das fahrerische Können bereits früher eines Systemeingriffs, einer Warnung etc., bedurft hätten. Für den Automobilhersteller ist das individuelle Leistungsvermögen seiner Kunden nicht bekannt, weshalb er nicht zuletzt aus Produkthaftungsgründen gezwungen ist, eine möglichst konservative, restriktive und damit sichere Grundeinstellung zu wählen. Beispielsweise wird bei einem Adaptive-Cruise-Control-System, das der automatischen Einhaltung eines Abstands des Kraftfahrzeugs zu einem vorausfahrenden Fahrzeug dient, bei jeder Inbetriebnahme die unproblematische Folgezeit von 1,8 Sekunden, was einer der halben Tachoanzeige entsprechenden Distanz zum vorausfahrenden Fahrzeug entspricht, gewählt.

Im Hinblick auf die höchst unterschiedlichen individuellen Fahrleistungen der einzelnen Fahrer besteht aber häufig der Wunsch des Fahrers, diverse Funktionen zu verändern, um beispielsweise seinem etwas aggressiveren oder sportlicheren Fahrstil auch hinsichtlich der eingestellten Funktionen gerecht zu werden. Manche Fahrer möchten beispielsweise bei zugeschaltetem Adaptive-Cruise-Control-System unter Inkaufnahme eines erhöhten Risikos sowie einer möglichen behördlichen Verwarnung etwas weiter auffahren als von der Grundeinstellung her vorgegeben, im Falle eines Spurwechselassistenten möchte der Fahrer gegebenenfalls in Lücken im benachbarten Fahrzeugstrom einscheren können, die in der Grundeinstellung als zu gering beurteilt werden würden, etc. Aber auch bezüglich anderer Funktionen, die den Fahrbetrieb nicht unmittelbar beeinflussen, gleichwohl aber eine Gefährdung mit sich bringen können, besteht häufig ein Wunsch zur Veränderung. Beispielsweise ist die Grundauslegung mitunter derart, dass die Vornahme von Einstellungen am Navigationssystem nicht während der Fahrt möglich ist, sondern nur bei einem Fahrzeugstillstand, worüber sichergestellt werden soll, dass der Fahrer während der Fahrt nicht durch die Programmierung des Navigationssystems abgelenkt wird. Diese Auslegung mag manchem Fahrer zu restriktiv sein, er würde sie gerne ändern, gleichwohl kann der Fahrzeughersteller aus Produkthaftungsgründen diese Möglichkeit mangels rechtlicher Absicherung nicht bieten. US-A-5 513 107 zeigt die Merkmale des Oberbegriffs des Anspruch 1.

Der Erfindung liegt das Problem zugrunde, ein Verfahren anzugeben, das es ermöglicht, dem Fahrer individuell mehr Möglichkeiten zur Funktionsveränderung auch bisher "starrer" festgelegter Funktionen bei gleichzeitiger Absicherung des Fahrzeugherstellers dahingehend, dass die Funktionsveränderung vom Fahrer bewusst unter Inkaufnahme möglicher Folgen gleich welcher Art vorgenommen wurde, zu bieten.

Zur Lösung dieses Problems ist bei einem Verfahren zum Verändern wenigstens einer einstellbaren Funktion eines Kraftfahrzeugs erfindungsgemäß vorgesehen, dass bei Vornahme der Veränderungen in Abhängigkeit der gewählten zu verändernden Funktion eine funktionsspezifische optische und/oder akustische Warninformation ausgegeben wird, die vom Fahrer durch Aufnahme wenigstens eines biometrischen oder anderen personenindividuellen unverwechselbaren Merkmals mittels einer Erfassungseinrichtung aktiv bestätigt werden muss, wonach das aufgenommene Merkmal mit einem der Funktion zugeordneten Vergleichsmerkmal verglichen wird, und in Abhängigkeit des Vergleichsergebnisses gegebenenfalls eine remanente Speicherung des Merkmals erfolgt und die gewünschte Veränderung vorgenommen wird oder nicht.

Die Erfindung lässt eine Veränderung bestimmter ausgewählter Funktionen, die in ihrer Art kritisch sind und unmittelbare oder mittelbare Auswirkungen auf den Fahrbetrieb und das Gefahrenpotential haben, zu, bindet jedoch den Fahrer aktiv in den Veränderungszyklus derart mit ein, dass er die gewünschte Veränderung verbindlich bestätigen muss, bevor diese überhaupt durchgeführt werden kann. Hierzu wird, wenn der Fahrer durch entsprechende Befehlseingabe seinen Funktionsänderungswunsch kundgetan hat, zunächst überprüft, ob es sich um eine besonders zu behandelnde Funktion bzw. Funktionsänderung handelt, die eine entsprechende aktive Beteiligung des Fahrers zur rechtlichen Absicherung benötigt. Ist dem so, erhält der Fahrer vor Durchführung der Veränderung eine optische oder akustische Warninformation, die ihn darauf hinweist, dass er einen beachtlichen, schwerwiegenderen Systemeingriff vornimmt. Diese optische Warnung kann ihm beispielsweise an einem Display ausgegeben werden, die akustische Warnung über ein entsprechendes Lautsprechersystem. Mit der Warnung wird der Fahrer aufgefordert, aktiv seinen Veränderungswunsch zu bestätigen, wozu er die Aufnahme eines biometrischen oder personenindividuellen Merkmals, das die Person des Fahrers eindeutig identifizieren lässt, veranlassen muss. Zur Aufnahme dieses Merkmals sind entsprechende Aufnahmemittel vorgesehen, die der Fahrer aktiv betätigen oder mit denen er aktiv zusammenwirken muss.

Nach Aufnahme des Merkmals wird dieses aufgenommene Merkmal mit einem Vergleichsmerkmal, das zu einem früheren Zeitpunkt aufgenommen und der spezifischen Funktion zugeordnet wurde, verglichen. Stimmen beide Merkmale überein, wird das aufgenommene Bestätigungsmerkmal remanent abgespeichert, zumindest so lange, bis eine erneute Veränderung der Funktion, beispielsweise ein Rücksetzen auf eine Grundeinstellung, vorgenommen wurde, und die gewünschte Funktionsveränderung durchgeführt. Ergibt sich im Rahmen des Vergleichs, dass das aufgenommene Merkmal oder das Vergleichsmerkmal nicht übereinstimmen, wird die Veränderung nicht übernommen.

Infolge der Aufnahme eines biometrischen oder personenindividuellen unverwechselbaren Merkmals ist eine unmittelbare Zuordnung des Funktions-änderungswunsches zu einer bestimmten Person in Verbindung mit dem vorzunehmenden Vergleich möglich. Die Abspeicherung des aufgenommenen Merkmals zur Durchführung der Veränderung bietet dann, wenn nach der Veränderung beispielsweise ein Unfall passiert, die Möglichkeit, nachzuweisen, dass der Fahrer bewusst in Kenntnisnahme einer möglichen Gefährdung die für den Unfall möglicherweise ursächliche Funktionsveränderung vorgenommen hat. Dem Fahrer kann hierüber also ein aktives, gewolltes Handeln zur Vornahme der Veränderung trotz der ihm bekannten, damit möglicherweise verbundenen Probleme nachgewiesen werden, so dass die Produkthaftungsrisiken des Fahrzeugherstellers in diesem Punkt begrenzt werden können.

Als biometrisches Merkmal kann beispielsweise ein Fingerabdruck, die Iris, die Gesichtsform oder eine Sprachantwort aufgenommen werden, wozu natürlich entsprechende Aufnahmeeinrichtungen wie ein Fingerabdrucksensor, ein Iris- und Gesichtsscanner oder eine Aufnahmeeinrichtung für die Sprachantwort vorgesehen sind. Beim Fingerabdruck, der Iris und dem Gesicht handelt es sich um unverwechselbare biometrische Merkmale, die durch entsprechende Formanalyse im Rahmen des Vergleichs verarbeitet werden. Auch die Sprachantwort ist hinreichend personenindividuell und eindeutig analysierbar, im Falle eines Vergleichs wird die Sprachantwort mit einem entsprechenden Vergleichssprachantwortfile verglichen und kann gleichermaßen gegebenenfalls abgespeichert werden. Die Sprachantwort kann beispielsweise ein definierter Wortlaut wie der Name oder ein bestimmtes Codewort sein, das der Fahrer sprechen muss. Wenngleich die Aufnahme des Merkmals nur einmal zu Beginn des Einstellvorgangs nötig ist, bietet insbesondere der Gesichtsscan, der insoweit kein unmittelbar aktives Handeln des Fahrers erfordert (er muss beim Fingerabdruckaufnehmen den Finger beispielsweise auf den Sensor legen etc.) und auch während der Fahrt des Öfteren durchgeführt werden kann, eine Möglichkeit zur kontinuierlichen Personenüberprüfung. Zur Vermeidung eines Missbrauchs ist es vor allem betreffend den Fingerabdruck-, Iris- und Gesichtssensor zweckmäßig, diese so zu positionieren, dass sie ausschließlich vom Fahrer betätigt werden können bzw. nur diesen erfassen und eine Betätigung durch den Beifahrer ausgeschlossen wird, so dass unterbunden wird, dass der Beifahrer die für ihn individualisierten Funktionseinstellungen vornehmen lässt, wenngleich er selbst nicht fährt.

Nachdem mitunter ein Fahrer mehrere Funktionen, unter denen auch die eine oder andere kritische Funktion sein kann, individuell einstellen möchte, sich quasi ein individuelles "Funktionspaket" definieren möchte, sieht eine vorteilhafte Weiterbildung des Erfindungsgedankens vor, dass mehrere Funktionen zu einem solchen Funktionspaket entweder vom Fahrer selbst oder werksseitig beispielsweise auf Wunsch des Fahrers definiert werden können, denen ein paketbezogenes Vergleichsmerkmal zugeordnet ist und von denen wenigstens eine einer aktiven Bestätigung durch den Fahrer bedarf, wobei bei gegebener korrekter Bestätigung alle Funktionen gemeinsam verändert werden. Das heißt, zur Einstellung des gesamten Änderungskomplexes ist lediglich einmal das Merkmal aufzunehmen und auszuwerten. Dabei besteht die Möglichkeit, dass der Fahrer bei Bedarf das Vergleichsmerkmal auch selbsttätig zuordnen kann, das heißt, er kann nach Belieben eine Eigenprogrammierung vornehmen und sich zu beliebiger Zeit auch fortlaufend das individuelle Funktionsprofil erstellen. Dies geschieht zweckmäßigerweise über ein entsprechendes Display, an dem er die entsprechenden Funktionen anwählt und durch Zuordnung des Vergleichsmerkmals als personenindividuell definiert. Es ist ihm möglich, über eine Menüführung sich ein oder bei Bedarf auch mehrere solcher Funktionspakete zusammenzustellen, die er zu Veränderungszwecken separat anwählen kann.

Im Rahmen des Vergleichs kann sich nun ergeben, dass ein Vergleichsmerkmal nicht hinterlegt wurde, das heißt, dass die aktive Bestätigung nicht gegeben werden kann und die Veränderung nicht vorgenommen wird. In einem solchen Fall ist es möglich, bei einer aufgrund des Vergleichsergebnisses nicht erfolgten Veränderung eine zweite Information auszugeben, die den Fahrer auf das Fehlen des Vergleichsmerkmals hinweist, worauf der Fahrer aktiv die Zuordnung nach gegebenenfalls nochmaliger Aufnahme des Merkmals erwirken kann, wonach die Veränderung erfolgt. Der Fahrer kann also quasi unmittelbar nach der ersten Anwahl den gegebenen Missstand korrigieren und sich selbst als Bezugsperson zu der gewünschten Einstellung definieren. Auch in diesem Fall bleibt jedoch die völlige Transparenz hinsichtlich seiner Handlung gegeben, nachdem er durch die erste Information, gegebenenfalls auch durch entsprechende Formulierung der zweiten Information auf die von ihm verursachte Änderung mit allen ihren Auswirkungen hingewiesen wurde, und er gleichwohl seine Bestätigung durch Gabe des biometrischen oder individuellen Merkmals abgibt.

Um sicherzustellen, dass nach einer Beendigung der Fahrt bei einem erneuten Fahrbeginn nicht die vormals geänderten Funktionen eingestellt sind, wenngleich nicht die Person, die die Änderung vorgenommen hat, fährt, sieht eine vorteilhafte Weiterbildung des Erfindungsgedankens vor, dass mit dem Abschalten des Motors des Kraftfahrzeugs die vorgenommenen Änderungen aufgehoben und die Funktion oder das Funktionspaket etc. auf eine Grundeinstellung zurückgesetzt wird. Bei dieser Grundeinstellung handelt es sich zweckmäßigerweise um die werksseitig von Haus aus vorgegebene "konservative" Einstellung.

Um ein Rücksetzen nicht nur bei dem Abschalten des Motors zwangsläufig vorzunehmen, sondern auch Situationen zu erfassen, bei denen der Motor läuft, gleichwohl aber der Fahrer offensichtlich das Fahrzeug verlassen hat und es mitunter sogar zu einem Fahrerwechsel kommen kann, der neue Fahrer aber die eingestellten Funktionen nicht möchte oder mit diesen überfordert ist, sieht eine vorteilhafte Weiterbildung der Erfindung vor, dass bei einer über geeignete Sensormittel erfassten Betriebssituation, die auf ein Verlassen des Kraftfahrzeugs durch den Fahrer trotz laufendem Motor schließen lässt, die vorgenommene Veränderung aufgehoben und die Funktion auf eine Grundeinstellung zurückgesetzt wird. Eine das Zurücksetzen auslösende Betriebssituation kann beispielsweise bei einem erfassten Stillstand des Fahrzeugs und gleichzeitigem Öffnen der Fahrertür ermittelt werden. Zusätzlich oder alternativ ist auch die Erfassung der Gewichtsbelastung des Fahrersitzes möglich, wobei bei einer länger dauernden Entlastung des Fahrersitzes vom Gewicht des Fahrers die Betriebssituation erkannt wird.

Weiterhin ist es zweckmäßig, wenn mit der Zuordnung des Vergleichsmerkmals zu einer fahrerindividuell veränderten Funktion oder einem Funktionspaket der Fahrer auch seinen Namen zur zugeordneten Speicherung eingibt, welcher Name nach einer vorgenommenen Veränderung der jeweiligen Funktion oder des Funktionspakets in einem Display zur optisch sichtbaren Individualisierung der Funktionseinstellung angezeigt wird. Im Display wird also kontinuierlich angegeben, bezogen auf welche Person die vorgenommenen Funktionsänderungen erstellt wurden, wodurch Verwechslungen ausgeschlossen und für den aktuellen Benutzer auch sofort erkennbar ist, dass seine gewünschte Einstellung auch vorgenommen wurde.

Neben dem Verfahren betrifft die Erfindung ferner ein Kraftfahrzeug, das naturgemäß über entsprechende Steuergeräte und Funktionselemente zur Durchführung der Funktionen etc. verfügt und natürlich ebenfalls eine entsprechende Eingabe- und Erfassungs- und Wiedergabemöglichkeit für die Funktionswünsche wie auch die Merkmale und die Warnungen verfügt, wobei das Kraftfahrzeug zur Durchführung des Verfahrens ausgebildet ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze eines erfindungsgemäßem Kraftfahrzeugs, und
- Fig. 2: eine Prinzipdarstellung zur Erläuterung des Ablaufs des erfindungsgemäßen Verfahrens.

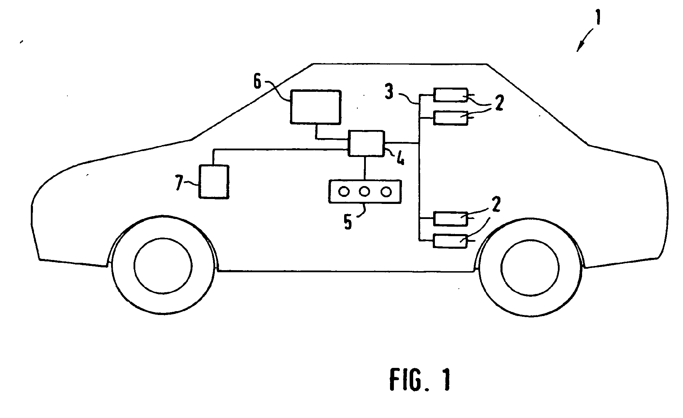

Fig. 1 zeigt ein erfindungsgemäßes Kraftfahrzeug 1 in Form einer Prinzipskizze, umfassend mehrere Steuergeräte 2, die beliebige systemspezifische Funktionen steuern, unter denen auch solche sind, die für den Fahrbetrieb mitunter kritisch sein können bzw. deren Änderung ein Gefahrenpotential mit sich bringt. Die Steuergeräte 2 können über einen gemeinsamen Bus 3 selektiv zur Vornahme von irgendwelchen Funktionsänderungen angesprochen werden, wozu ein zentrales Steuergerät 4 vorgesehen ist, das tätig wird, wenn eine Funktionsänderung, die einer aktiven Bestätigung bedarf, durchgeführt werden soll. Das Steuergerät 4, das in der Prinzipskizze in Fig. 1 als separates Steuergerät dargestellt ist (gleichermaßen kann seine Funktionalität aber auch in ein beliebiges Steuergerät implementiert sein) kommuniziert zum einen mit Eingabemitteln 5, über die eine gewünschte Funktion, die zu verändern ist, überhaupt angewählt werden kann. Beispielsweise kann es sich bei dem Eingabemittel 5 um ein zentrales Eingabemittel, das nach Art eines Joysticks in Form eines Drehknopfs ausgebildet ist, und über das in einer an einem Monitor 6 gezeigten Menüführung eine entsprechende Funktion oder ein Funktionspaket angewählt werden kann, handeln. Auch andere Eingabemittel wie Schalter, Taster, ein Touchscreen etc. sind denkbar. Die gewählte Funktion oder das gewählte Funktionspaket, also eine Gruppe definierter Funktionen, die beispielsweise vom Fahrer individuell bereits zu dem Paket konfiguriert wurden, wird nach entsprechender Anwahl vom Steuergerät 4, wo beispielsweise das Paket hinterlegt ist, am Monitor 6 ausgegeben. Gleichzeitig wird am Monitor 6 eine entsprechende Information ausgegeben, die den Fahrer zum einen darauf hinweist, dass die gewünschte Veränderung aufgrund eines gravierenderen Systemeingriffs beträchtliche Auswirkungen auf das Betriebsverhalten des Fahrzeugs hat, mithin also Gefahr bringend sein kann, zum anderen wird er aufgefordert, aktiv seinen Änderungswunsch zu bestätigen. Hierfür wird ein biometrisches Merkmal oder ein anderes personenindividuelles unverwechselbares Merkmal aufgenommen, wozu ein entsprechendes Erfassungsmittel 7, z.B. ein Fingerabdrucksensor oder ein Irisscanner oder ein Gesichtsscanner oder eine Sprachaufnahmeeinrichtung, vorgesehen ist. Gibt der Fahrer aktiv das Merkmal ein, legt also beispielsweise ein Finger auf den Fingerabdrucksensor oder betätigt er den Iris- oder Gesichtsscan-Aufnahmetaster, so wird das aufgenommene Merkmal der Steuerungseinrichtung 4 gegeben, in der ein Vergleichsmerkmal, das der gewünschten Funktion oder dem Funktionspaket zugeordnet ist, eingelesen und mit dem aufgenommenen Merkmal verglichen. Abhängig davon, wie der Vergleich ausfällt, wird die gewünschte Veränderung vorgenommen oder nicht bzw. sie wird zumindest temporär noch nicht eingestellt, worauf nachfolgend noch eingegangen wird.

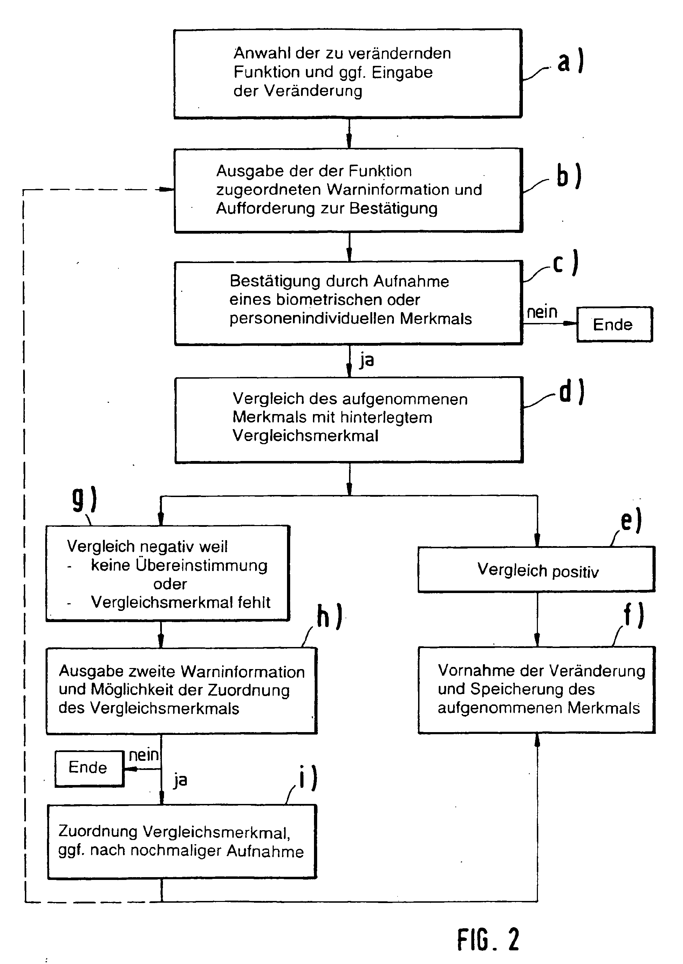

Fig. 2 zeigt in detaillierterer Form den Ablauf. Im Schritt a) wird zunächst vom Fahrer die zu verändernde Funktion oder das gewünschte der Veränderung zugrunde zu legende Funktionspaket wie bereits beschrieben angewählt bzw. je nach Funktionstyp die Änderung eingegeben, beispielsweise bei einem Adaptive-Cruise-Control-System eine Veränderung der Systemeingriffsschwelle von den üblichen 1,8 Sekunden beispielsweise auf 0,5 Sekunden (ein solcher Eingriff würde ein näheres Auffahren ermöglichen, bis das System abstandsregelnd eingreift). Unmittelbar nach der Anwahl wird nun seitens der Steuerungseinrichtung 4 überprüft, ob die angewählte Funktion "kritischer" Natur ist und einer aktiven Bestätigung zur Freigabe bzw. Einstellung bedarf, oder ob das angewählte Funktionspaket eine solche enthält oder ihm ein solcher Status zugeschrieben ist. Ist dies der Fall, wird, wie im Schritt b) dargestellt ist, eine der Funktion oder dem Funktionspaket zugeordnete Warninformation am Monitor 6 ausgegeben, die auf die mit der gewünschten Änderung verbundenen Gefahren oder Probleme hinweist. Gleichzeitig wird eine Aufforderung ausgegeben, die den Fahrer zur aktiven Gabe eines Bestätigungssignals auffordert.

Im Schritt c) gibt nun der Fahrer, der den Änderungswunsch geäußert hat, das entsprechende Bestätigungssignal durch Aufnahme eines biometrischen oder personenindividuellen unverwechselbaren Merkmals, also beispielsweise des Fingerabdrucks oder eines Iris- oder Gesichtsscans, der über das entsprechende Erfassungsmittel 7 aufgenommen wird. Hierfür steht dem Fahrer beispielsweise ein bestimmtes Zeitintervall von z.B. 30 Sekunden zur Verfügung. Wird das Merkmal innerhalb dieser Zeit nicht aufgenommen, erfolgt in keinem Fall die Funktionseinstellung, der Einstellvorgang wird abgebrochen (Ende).

Nach Aufnahme des Merkmals wird im Schritt d) von der Steuerungseinrichtung 4 ein Vergleich zwischen dem aufgenommenen Merkmal und einem zu einem beliebigen Zeitpunkt vorher hinterlegten Vergleichsmerkmal, also ebenfalls einem früheren aufgenommenen Fingerabdruck oder Irisscan etc. vorgenommen. Es wird also die Übereinstimmung der Person, die seinerzeit das Vergleichsmerkmal zugeordnet hat, mit der Person, die die Veränderung wünscht, vorgenommen.

Je nachdem, wie nun der Vergleich ausfällt, ist die weitere Vorgehensweise unterschiedlich.

Fällt der Vergleich positiv aus, stimmen also beispielsweise die Fingerabdrücke überein, wie im Schritt e) dargestellt ist, so wird im Schritt f) die gewünschte Veränderung der Funktion bzw. die Einstellung der geänderten Funktion vorgenommen, gleichzeitig wird das aufgenommene Merkmal in der Steuerungseinrichtung 4 abgelegt, um es im Bedarfsfall später zu Verifizierungszwecken, dass der Fahrer tatsächlich aktiv die Bestätigung gegeben hat, auslesen zu können.

Fällt der Vergleich negativ aus, wie im Schritt g) gezeigt, kann dies entweder daran liegen, dass keine Übereinstimmung gegeben ist, oder dass überhaupt kein Vergleichsmerkmal zugeordnet ist. In diesem Fall wird im Schritt h) eine zweite Warninformation ausgegeben, die den Fahrer darauf hinweist, und ihm die Möglichkeit der Zuordnung des Vergleichsmerkmals anbietet. Es kann der Fall auftreten, dass der Fahrer erstmalig eine solche Veränderung wünscht, wobei hier naturgemäß noch kein Vergleichsmerkmal zugeordnet sein kann. Sofern der Fahrer dies wünscht, kann er dies beispielsweise durch Tastendruck oder durch erneute Aufnahme des Fingerabdrucks etc. bestätigen, wonach das Vergleichsmerkmal zugeordnet wird, wie im Schritt i) dargestellt ist. Der Fahrer "autorisiert" sich in diesem Fall also erstmalig durch Zuordnung des Vergleichsmerkmals. Wünscht er dies nicht und gibt er innerhalb der vorgegebenen Zeitspanne keinen Befehl ein, wird der Vorgang beendet (Ende).

Nun kann je nach Auslegung des Systems unmittelbar die Vornahme der Veränderung gemäß Schritt f) und die Speicherung des Merkmals vorgenommen werden, wie durch die durchgezogene Linie zum Schritt f) dargestellt ist. Alternativ besteht die Möglichkeit, wie durch die gestrichelte Linie zum Schritt b) dargestellt ist, nochmals die erste Warnfunktion auszugeben, um den Fahrer nochmals unmittelbar auf die mit der Änderung zusammenhängenden Wirkungen aufmerksam zu machen und zur Bestätigung des Änderungswunsches durch die Merkmalsaufnahme anzuhalten, wonach die Schritte c) - f) abgearbeitet werden.

An dieser Stelle ist festzuhalten, dass die vorgenommene Änderung nur so lange erfolgt, so lange der Motor läuft. Wird der Motor abgestellt, erhält die Steuerungseinrichtung 4 ein entsprechendes Signal, was dazu führt, dass sämtliche vorher vorgenommenen Veränderungen zurückgesetzt werden und das Fahrzeug insgesamt in einen Grundeinstellungszustand zurückgesetzt wird. Daneben ist es denkbar, auch während des laufenden Motors zu überprüfen, ob eine Betriebssituation eingetreten ist, die auf ein Verlassen des Fahrzeugs durch den Fahrer schließen lässt. Es kann der Fall eines Fahrerwechsels eintreten, wobei zu vermeiden ist, dass für den ersten Fahrer "zulässigerweise" vorgenommene Einstellungen vom zweiten Fahrer beibehalten werden, dieser aber mangels fahrerischen Könnens überfordert wäre. Tritt ein solcher Fall ein, würde im gezeigten Beispiel bevorzugt gemäß Schritt b) die Warninformation ausgegeben, wonach der "neue" Fahrer die Bestätigung geben muss. Danach laufen entweder die Schritte c) - f) ab, oder - sollte sein Vergleichsmerkmal nicht ebenfalls zu der den geänderten Funktionen hinterlegt sein (es können ja zu einer Funktion oder einem Funktionspakete mehrere Personen ihr individuelles Vergleichsmerkmal hinterlegt haben) - die Schritte c), d) und g) - i).

## Patentansprüche

1. Verfahren zum Verändern wenigstens einer einstellbaren Funktion eines Kraftfahrzeugs,
**dadurch gekennzeichnet,**
**dass** bei Vornahme der Veränderung in Abhängigkeit der gewählten zu verändernden Funktion eine funktionsspezifische optische und/oder akustische Warninformation ausgegeben wird, die vom Fahrer durch Aufnahme wenigstens eines biometrischen oder anderen personenindividuellen unverwechselbaren Merkmals mittels einer Erfassungseinrichtung aktiv bestätigt werden muss, wonach das aufgenommene Merkmal mit einem der Funktion zugeordneten Vergleichsmerkmal verglichen wird, und in Abhängigkeit des Vergleichsergebnisses gegebenenfalls eine remanente Speicherung des Merkmals erfolgt und die gewünschte Veränderung übernommen wird oder nicht.

2. Verfahren nach Anspruch 1,
**dadurch gekennzeichnet,**
**dass** als biometrisches Merkmal ein Fingerabdruck, die Iris, das Gesicht oder eine Sprachantwort aufgenommen wird.

3. Verfahren nach Anspruch 1 oder 2,
**dadurch gekennzeichnet,**
**dass** mehrere werkseitig oder fahrerseitig als ein Funktionspaket definierte Funktionen, denen ein paketbezogenes Vergleichsmerkmal zugeordnet ist und von denen wenigstens eine der aktiven Bestätigung durch den Fahrer bedarf, gemeinsam verändert werden.

4. Verfahren nach einem der vorangehenden Ansprüche,
**dadurch gekennzeichnet,**
**dass** der Fahrer bei Bedarf das Vergleichsmerkmal selbsttätig zuordnen kann.

5. Verfahren nach einem der vorangehenden Ansprüche,
**dadurch gekennzeichnet,**
**dass** bei einer aufgrund des Vergleichsergebnisses nicht erfolgten Veränderung eine zweite Information ausgegeben wird, die den Fahrer auf des Fehlen des Vergleichsmerkmals hinweist, worauf der Fahrer aktiv die Zuordnung nach gegebenenfalls nochmaliger Aufnahme des Merkmals erwirken kann, wonach die Veränderung erfolgt.

6. Verfahren nach einem der vorangehenden Ansprüche,
**dadurch gekennzeichnet,**
**dass** mit dem Abschalten des Motors des Kraftfahrzeugs die vorgenommene Veränderung aufgehoben und die Funktion auf eine Grundeinstellung zurückgesetzt wird.

7. Verfahren nach einem der vorangehenden Ansprüche,
**dadurch gekennzeichnet,**
**dass** bei einer über geeignete Sensormittel erfassten Betriebssituation, die auf ein Verlassen des Kraftfahrzeugs durch den Fahrer trotz laufendem Motor schließen lässt, die vorgenommene Veränderung aufgehoben und die Funktion auf eine Grundeinstellung zurückgesetzt wird.

8. Verfahren nach Anspruch 7,
**dadurch gekennzeichnet,**
**dass** eine das Zurücksetzen auslösende Betriebssituation bei einem erfassten Stillstand des Fahrzeugs und gleichzeitigem Öffnen der Fahrertür oder bei einer Entlastung des Fahrersitzes vom Gewicht des Fahrers erkannt wird.

9. Verfahren nach einem der vorangehenden Ansprüche,
**dadurch gekennzeichnet,**
**dass** mit der Zuordnung des Vergleichsmerkmals zu einer fahrerindividuell veränderten Funktion oder einem Funktionspaket der Fahrer auch seinen Namen zur zugeordneten Speicherung eingibt, welcher Name nach einer vorgenommenen Veränderung der jeweiligen Funktion in einem Display zur optisch sichtbaren Individualisierung der Funktionseinstellung angezeigt wird.

10. Kraftfahrzeug, ausgebildet zur Durchführung des Verfahrens nach einem der Ansprüche 1 bis 9.

## Claims

1. A method for changing at least one adjustable function on a motor vehicle,
**characterised in that** at the time the change is made, depending upon the selected function that is to be changed, a function-specific visual and/or acoustic alert is produced which must be actively confirmed by the driver by recording with the aid of a data capture device at least one biometric or other distinctive feature that is unique to each individual, whereupon the recorded feature is compared with a reference feature assigned to the function, and depending upon the result of the comparison remanent storage of the feature takes place, if appropriate, and the desired change is or is not made.

2. The method according to claim 1,
**characterised by** recording a fingerprint, the iris, the face or a spoken response as the biometric feature.

3. The method according to claim 1 or 2,
**characterised in that** a plurality of functions, factory-set or driver-defined as a function package, are jointly changed, to which a package-based reference feature is assigned and at least one of which requires active confirmation from the driver.

4. The method according to any one of the preceding claims,
**characterised in that** the driver can independently assign the reference feature as required.

5. The method according to any one of the preceding claims,
**characterised in that** in the event that on account of the comparison result no change is made, a second signal is given which alerts the driver to the absence of the reference feature, whereupon the driver can actively bring about the assignment after recording the feature once more, if appropriate, after which the change takes place.

6. The method according to any one of the preceding claims,
**characterised in that** switching off the engine of the motor vehicle has the effect of cancelling the change and restoring the function to a default setting.

7. The method according to any one of the preceding claims,
**characterised in that** in the event that an operational situation detected via suitable sensors suggests that the driver has left the motor vehicle in spite of the fact that the engine is running, the change that has been made is cancelled and the function restored to a default setting.

8. The method according to claim 7,
**characterised in that** an operational situation that triggers resetting is recognised in the event that the vehicle is detected to be stationary and simultaneously the driver's door opened, or in the event that the driver's seat is relieved of the weight of the driver.

9. The method according to any one of the preceding claims,
**characterised in that** along with assigning the reference feature to a driver-customised changed function or a function package, the driver also inputs his name into the assigned memory, which name is indicated on a display for visual customisation of the function setting after a change has been made to the respective function.

10. A motor vehicle designed to carry out the method according to any one of claims 1 to 9.

## Revendications

1. Procédé de changement d'au moins une fonction réglable d'un véhicule automobile,
**caractérisé en ce que**,
lors de l'accomplissement du changement selon la fonction choisie à modifier, une information d'avertissement optique et / ou acoustique spécifique à la fonction est émise, qui doit être confirmée de manière active par le conducteur par l'enregistrement d'au moins une caractéristique biométrique ou d'une autre caractéristique indubitable propre à l'individu à l'aide d'un système de saisie, après quoi la caractéristique enregistrée est comparée avec une caractéristique de comparaison affectée à la fonction, et en fonction du résultat de la comparaison, le cas échéant, une mémorisation rémanente de la caractéristique est effectuée et la modification souhaitée est réalisée ou non.

2. Procédé selon la revendication 1
**caractérisé en ce que**,
en tant que caractéristique biométrique, on enregistre une empreinte digitale, l'iris, la forme du visage ou une réponse vocale.

3. Procédé selon la revendication 1 ou 2,
**caractérisé en ce que**,
plusieurs fonctions définies en usine ou par le conducteur en tant qu'un paquet de fonctions - auxquelles une caractéristique de comparaison se référant au paquet est affectée et parmi lesquelles au moins une nécessite la confirmation active du conducteur - peuvent être modifiées de manière commune.

4. Procédé selon l'une des revendications précédentes,
**caractérisé en ce que**,
en cas de besoin, le conducteur peut affecter automatiquement la caractéristique de comparaison.

5. Procédé selon l'une des revendications précédentes,
**caractérisé en ce que**,
lors d'une modification non réalisée suite au résultat de la comparaison, une seconde information est émise, qui informe le conducteur du défaut de la caractéristique de comparaison, à la suite de quoi le conducteur peut obtenir de manière active l'affectation, après éventuellement un nouvel enregistrement de la caractéristique, la modification s'ensuivant alors.

6. Procédé selon l'une des revendications précédentes,
**caractérisé en ce que**,
lors de l'arrêt du moteur du véhicule automobile, la modification réalisée est annulée et la fonction est réinitialisée sur le réglage de base.

7. Procédé selon l'une des revendications précédentes,
**caractérisé en ce que**,
en cas d'une situation de service détectée par l'intermédiaire de moyens de détection appropriés, qui laisse conclure à un abandon du véhicule automobile par le conducteur, malgré le fait que le moteur tourne toujours, la modification réalisée est annulée et la fonction est réinitialisée à un réglage de base.

8. Procédé selon la revendication 7
**caractérisé en ce que**,
il est reconnu une situation de service déclenchant la remise à zéro lors d'un arrêt détecté du véhicule automobile et d'une ouverture simultanée de la porte du conducteur ou lors d'une décharge du siège du véhicule du poids du conducteur.

9. Procédé selon l'une des revendications précédentes,
**caractérisé en ce que**,
en même temps que l'affectation de la caractéristique de comparaison à une fonction modifiée personnalisée au conducteur ou un paquet de fonctions, le conducteur entre également son nom pour l'archivage associé, lequel nom est affiché, après une modification réalisée de la fonction respective, sur un écran de visualisation pour une individualisation visible optiquement du réglage de la fonction.

10. Véhicule automobile, réalisé pour la remise en oeuvre du procédé conformément à l'une des revendications 1 à 9.
